# EUROPÄISCHE PATENTANMELDUNG

(11) **EP 0 564 799 A2**
(43) Veröffentlichungstag der Anmeldung: **13.10.1993**
(21) Anmeldenummer: 93103009.2
(22) Anmeldetag: 26.02.1993
(51) Int. Cl.: B01D 39/08, B32B 5/12

(54) **Mehrschichtiges Filtermaterial**

(30) Priorität: 10.04.1992 DE 4212112
(71) Anmelder: Christian Heinrich Sandler GmbH & Co. KG, D-95126 Schwarzenbach a d Saale (DE)
(72) Erfinder: Straub, Roland, W-8676 Schwarzenbach/Saale (DE); Schreiner, Dieter, W-8660 Münchberg (DE)
(74) Vertreter: LOUIS, PÖHLAU, LOHRENTZ & SEGETH

(57) **Zusammenfassung**

Es wird ein mehrschichtiges Filtermaterial mit einem Grobfilter, einem Feinfilter und einem Träger beschrieben, die in Durchströmungsrichtung des Filtermaterials in dieser Reihenfolge vorgesehen sind. Der Träger ist ein Spinnvlies mit einem Flächengewicht von 10 bis 100 g/m², einer Dicke zwischen 0,5 und 3 mm und einer Luftdurchlässigkeit von 500 bis 5000 l/m² . sec bei einer Druckdifferenz von 10 mm Wassersäule. Er bildet für das Feinfilter eine Spinnunterlage. Das Feinfilter ist ein schmelzgeblasenes Mikrofaservlies aus quasi endlosen Fasern mit einem mittleren Faserdurchmesser von 0,5 bis 15 µm und weist ein Flächengewicht von 0,5 bis 10 g/m² auf. Das Grobfilter ist ein Vlies aus Synthese- und/oder Naturfasern mit einem Flächengewicht von 50 bis 300 g/m² und einer Dicke zwischen 1 und 20 mm.

## Beschreibung

Die Erfindung betrifft ein mehrschichtiges Filtermaterial mit einem Grobfilter, einem Feinfilter und einem Träger, die in Durchströmungsrichtung des Filtermaterials in dieser Reihenfolge vorgesehen sind.

Ein derartiges mehrschichtigeS Filtermaterial ist aus der DE 25 03 615 C2 bekannt. Als Träger kommt dort eine vorgefertigte selbsttragende poröse Bahn zur Anwendung. Auf dem Träger ist eine das Feinfilter bildende Zwischenschicht aus polymeren Mikrofasern vorgesehen. Die Zwischenschicht wird auf dem Träger mittels eines Lösungsmittel-Spinnverfahrens erzeugt. Bei diesem Spinnverfahren werden Fasern mit einem mittleren Durchmesser von höchstens 0,25µm, vorzugsweise höchstens 0,3µm erzeugt. Das bedeutet jedoch einen beträchtlichen Fertigungsaufwand, da sich bekanntermaßen die Faserfeinheit zu den Produktionskosten umgekehrt proportional verhält. Derartige feine Fasern mögen sich für sog. "HEPA/ULPA"-Filter lohnen. Für die Filterklassen EU 5 bis EU 9 ist der Fertigungsaufwand jedoch zu groß.

Die EP 0 106 908 D1 offenbart ein mehrschichtiges Filtermaterial, Verfahren zu dessen Herstellung und eine Verwendung desselben, wobei das Filtermaterial aus mindestens einer Grobfilterschicht sowie aus mindestens einer Feinfilterschicht besteht. Zwischen der Grobfilterschicht und der Feinfilterschicht ist eine Mischzone vorgesehen, welche ein Gemisch der Faseranteile von Grob- und Feinfilterschicht umfaßt. Die Filterschichten enthalten einen Anteil natürlicher Fasern, wobei dieses bekannte Filtermaterial auf einer Papiermaschine hergestellt wird. Aufgrund des Herstellungsverfahrens sowie der Tatsache, daß bei diesem bekannten Verfahren der Zusatz natürlicher Fasern eine Verminderung der Bauschkraft des Vlieses bewirkt, kann davon ausgegangen werden, daß die Druckdifferenz eines mit diesem bekannten Material konfektionierten Filters relativ hoch ist. Anwendung findet dieses bekannte Filtermaterial insbes. zur Filtration von Verunreinigungen aus der Luft, Gasen, Dämpfen oder Flüssigkeiten. Es kann bei Luftfiltern, Filter für Gasturbinen sowie als Staubfilter von Industriestäuben, in Dunstabzughauben, als Filter für Klimaanlagen, als Ölfilter, Treibstoffilter und Hydraulik-Öl-Filter Verwendung finden. Besonders geeignet ist dieses bekannte Filtermaterial zur Verwendung als Luftfilter in Kraftfahrzeugen. Es besitzt vorzugsweise eine Dicke zwischen 0,5 und 0,8 mm bzw. zwischen 0,6 und 0,7 mm. Eine Tiefenfiltration ist mit einem derartig dünnen Filtermaterial nicht möglich. Da hier keine Mikrofasern verwendet werden, sind die Flächengewichte relativ hoch.

Die EP 0 375 234 A1 beschreibt ein mehrschichtiges Filtermaterial geringer Gesamtdicke, das insbes. für Staubsaugerbeutel vorgesehen ist und Elektretfasern enthält. Die Dicke dieses Filtermaterials liegt zwischen 0,3 und 0,6 mm, so daß eine Tiefenfiltration mit geringem Anstieg der Druckdifferenzwerte mit diesem bekannten Filtermaterial nicht möglich ist.

Aus der EP 0 432 586 A2 ist ein mehrschichtiges Filtermaterial mit Langzeitfiltereigenschaften bekannt, das aus Vliesstoffen besteht, die aus Fasern oder Filamenten gleicher oder verschiedenartiger Polymere gefertigt sind.Die verschiedenen Spinnvliesschichten weisen unterschiedliche Feinheiten, Flächengewichte bzw. Dicken auf. So liegt das Flächengewicht des Grob- bzw. Tiefenfilters vorzugsweise zwischen 150 und 500 g/m², während das Flächengewicht des Feinfilters zwischen 30 und 100 g/m² liegt. Die Dicke des Feinfilters beträgt vorzugsweise 0,2 bis 0,6 mm und die Dicke des Tiefenfilters liegt vorzugsweise zwischen dem 2- und 20-fachen der Dicke der Feinfilterschicht. Die genannten Flächengewichte der verschiedenen Filterschichten in Verbindung mit der hohen Packungsdichte des Tiefenfilters von 0,08 bis 0,15 g/cm³ bzw. einer Packungsdichte des Feinfilters von 0,1 bis 0,2 g/cm³ lassen bei diesem bekannten mehrschichtigen Filtermaterial relativ hohe Druckdifferenzen erwarten.

Der Erfindung liegt die Aufgabe zugrunde, ein mehrschichtiges Filtermaterial der eingangs genannten Art zu schaffen, das insbes. für die Abscheideklassen EU 5 bis EU 9 optimale anwendungstechnische Eigenschaften wie niedrige Druckdifferenzen und hohen Abscheide- und Wirkungsgrad aufweist.

Diese Aufgabe wird erfindungsgemäß dadurch gelöst, daß der Träger ein Spinnvlies mit einem Flächengewicht von 10 bis 100g/m², einer Dicke zwischen 0,5 und 1 mm und einer Luftdurchlässigkeit von 500 bis 5000 l/m².sec bei einer Druckdifferenz von 10 mm Wassersäule ist und eine Spinnunterlage für das Feinfilter bildet, daß das Feinfilter ein schmelzgeblasenes Mikrofaservlies aus quasi endlosen Fasern mit einem mittleren Faserdurchmesser von 0,5 bis 15 µm ist und ein Flächengewicht von 0,5 bis 10 g/m² aufweist, und daß das auf dem Feinfilter vorgesehene Grobfilter ein Vlies aus Synthese- und/oder Naturfasern mit einem Flächengewicht von 50 bis 300 g/m² und einer Dicke zwischen 1 und 20 mm ist. Der mehrschichtige Aufbau des erfindungsgemäßen Filtermaterials aus textilem Trägervlies, Fein. und Grobfilterschicht bewirkt eine Optimierung der Tiefenfiltration in der Weise, daß grobe Partikel in der Grobfilterschicht zurückgehalten werden. Die die Grobfilterschicht passierenden Feinstpartikel werden dann im Feinfilter zurückgehalten. Auf diese Weise ist es möglich, die Druckdifferenz am Filtermaterial über lange Zeit niedrig zu halten, woraus eine hohe Standzeit des Filtermaterials resultiert. Ein weiterer Vorteil des erfindungsgemäßen Filtermaterials besteht in dem sehr niedrigen Auflagegewicht der Feinfilterschicht, weil sich dadurch die Wirtschaftlichkeit des Fertigungsverfahrens des erfindungsgemäßen Filtermaterials erhöht.

Als vorteilhaft hat es sich erwiesen, wenn der Träger ein Polyolefin-Spinnvlies, vorzugsweise ein Polypropylen-Spinnvlies, mit einem Flächengewicht von ca. 30 g/m² und einer Luftdurchlässigkeit von ca. 2000 l/m² . sec bei einer Druckdifferenz von 10 mm Wassersäule ist, auf den als Feinfilter ein Mikrofaservlies aus Polyolefinfasern appliziert ist. Besonders vorteilhaft ist es, wenn das Feinfilter-Mikrofaservlies ein Flächengewicht zwischen 0,5 und 20g/m², vorzugsweise zwischen 1 und 6 g/m² und einem mittleren Faserdurchmesser zwischen 0,5 und 5 µm aufweist. Das Feinfilter-Mikrofaservlies kann z.B. ein Polypropylenspinnvlies mit einem Flächengewicht von ca. 2 g/m² und einem mittleren Faserdurchmesser von ca. 2 µm sein. Das Grobfiltervlies weist vorzugsweise ein Flächengewicht von 100 bis 150 g/m² und eine Dicke von 8 bis 10 mm auf. Für das Grobfiltervlies hat sich eine Fasermischung aus
25 % einer Polyester/Polyester-Biko-Bindefaser 2,2 dtex
40 % einer 1,7 dtex Polyesterfaser
35 % einer 2,2 dtex Polyäthylen/Polyester-Biko-Faser
als besonders vorteilhaft erwiesen.

Das als Spinnunterlage für die Feinfilterschicht dienende Trägervlies trägt in vorteilhafter Weise zur Stabilisierung des Mehrschichtenverbundes bei. Außerdem wird durch das genannte Trägervlies die Berstfestigkeit des Filtermaterials erhöht, was insbes. bei seiner Verwendung für Filtertaschen von Bedeutung ist. Außerdem gewährleistet das besagte Trägervlies die erforderliche Stichausreißkraft bei konfektionierten Filtertaschen und trägt zu deren Eigensteifigkeit bei.

Die Feinfilterschicht aus quasi endlosen Fasern wird entsprechend dem gewünschten Abscheidegrad und dem gewünschten Wirkungsgrad in ihrem Flächengewicht passend gewählt. Sie besteht vorzugsweise aus Polyolefinfasern, wobei selbstverständlich auch andere Polymere anwendbar sind. Die quasi endlosen Filamente bzw. Fasern bewirken, daß mit äußerst geringen Auflagemengen die entsprechend der jeweiligen Norm geforderten Abscheidewerte erreichbar sind.

Wie bereits erwähnt worden ist, besteht die Grobfilterschicht aus einem Vlies aus Synthese- und/oder Naturfasern, vorzugsweise aus Polyesterfasern, die mit Polyester- und Polyolefin-Biko-Fasern im Feintiterbereich, genadelt oder ungenadelt, thermisch und/oder bindemittelverfestigt, gemischt sein können. Die Grob- bzw. Vorfilterschicht hat die Aufgabe, zu verhindern, daß grobe Partikel bis zur Feinfilterschicht gelangen und diese belegen bzw. verstopfen. Das heißt, daß ein vorzeitiger Anstieg der Druckdifferenz verhindert wird.

Das erfindungsgemäße Filtermaterial eignet sich insbes. zur Verwendung für Filtertaschen und hat z.B. im NaCl-Abscheidetest einen Abscheidegrad von > 30 % und einen Anfangsdruckdifferenzwert von < 30 Pa. Wird das erfindungsgemäße Filtermaterial zur Herstellung von Filtertaschen verwendet, so wird im Ashrae-Test die Leistungsklasse EU 7 erreicht.

## Patentansprüche

1. Mehrschichtiges Filtermaterial mit einem Grobfilter, einem Feinfilter und einem Träger, die in Durchströmungsrichtung des Filtermaterials in dieser Reihenfolge vorgesehen sind,
**dadurch gekennzeichnet**,
daß der Träger ein Spinnvlies mit einem Flächengewicht von 10 bis 100 g/m², einer Dicke zwischen 0,5 und 3 mm und einer Luftdurchlässigkeit von 500 bis 5000 l/m² . sec bei einer Druckdifferenz von 10 mm Wassersäule ist und eine Spinnunterlage für das Feinfilter bildet, daß das Feinfilter ein schmelzgeblasenes Mikrofaservlies aus quasi endlosen Fasern mit einem mittleren Faserdurchmesser von 0,5 bis 15 µm ist und ein Flächengewicht von 0,5 bis 20 g/m² aufweist, und daß das auf dem Feinfilter vorgesehene Grobfilter ein Vlies aus Synthese- und/oder Naturfasern mit einem Flächengewicht von 50 bis 300 g/m² und einer Dicke zwischen 1 und 20 mm ist.

2. Filtermaterial nach Anspruch 1,
**dadurch gekennzeichnet**,
daß der Träger ein PA, PES oder Polyolefin-Spinnvlies, vorzugsweise ein Polypropylen-Spinnvlies, mit einem Flächengewicht von ca. 30 g/m² und einer Luftdurchlässigkeit von 2000 l/m² . sec bei einer Druckdifferenz von 10 mm Wassersäule ist, auf den als Feinfilter ein Mikrofaservlies aus Polyolefinfasern appliziert ist.

3. Filtermaterial nach Anspruch 1 oder 2,
**dadurch gekennzeichnet**,
daß das Feinfilter-Mikrofaservlies ein Flächengewicht zwischen 0,5 und 20 g/m², vorzugsweise zwischen 1 und 6 g/m² und einen mittleren Faserdurchmesser zwischen 0,5 und 15 µm aufweist.

4. Filtermaterial nach einem der vorhergehenden Ansprüche,
**dadurch gekennzeichnet**,
daß das Feinfilter-Mikrofaservlies aus EVA, PES, PA, PE oder PP mit einem Flächengewicht von ca. 0,5 bis 20g/m² und einem mittleren Faserduchmesser von ca. 0,5 bis 15 µm besteht.

5. Filtermaterial nach Anspruch 1,
**dadurch gekennzeichnet**,
daß das Grobfiltervlies ein Flächengewicht von 500 bis 300 g/m², vorzugsweise 100 bis 150 g/m² und eine Dicke von 1 bis 20 mm, vorzugsweise von 8 bis 10 mm aufweist.

6. Filtermaterial nach Anspruch 5,
**dadurch gekennzeichnet**,
daß das Grobfiltervlies aus Synthese und/oder Naturfasern, vorzugsweise aus 100% PES-Fasern, besteht.

7. Verwendung des Filtermaterials nach einem der vorhergehenden Ansprüche für Filtertaschen, plissierte Filter oder plane Filtermedien.
